(19) Europäisches Patentamt
European Patent Office
Office européen des brevets

(11) **EP 4 458 875 A1**

(12) **EUROPÄISCHE PATENTANMELDUNG**

(43) Veröffentlichungstag:
06.11.2024  Patentblatt 2024/45

(21) Anmeldenummer: 23171530.1

(22) Anmeldetag: **04.05.2023**

(51) Internationale Patentklassifikation (IPC):
**C08G 18/08** (2006.01)     **C08G 18/10** (2006.01)
**C08G 18/32** (2006.01)     **C08G 18/48** (2006.01)
**C08G 18/73** (2006.01)

(52) Gemeinsame Patentklassifikation (CPC):
(C-Sets verfügbar)
**C08G 18/10; C08G 18/0895; C08G 18/3206;
C08G 18/48; C08G 18/73**          (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
• **Hocke, Heiko**
**51375 Leverkusen (DE)**

• **Koenig, Thomas**
**51375 Leverkusen (DE)**
• **Muenchrath, Rene**
**51061 Köln (DE)**
• **Peerenboom, Simon**
**47495 Rheinberg (DE)**

(74) Vertreter: **Levpat**
**c/o Covestro AG**
**Gebäude K12**
**51365 Leverkusen (DE)**

(54) **VERFAHREN ZUR HERSTELLUNG EINES THERMOPLASTISCHEN POLYURETHANS MIT HOHER MOLMASSE UND GERINGEM ALLOPHANATGEHALT**

(57)     Die Erfindung betrifft ein Verfahren zur Herstellung eines thermoplastischen Polyurethans, umfassend die Schritte:

i. Herstellung eines aliphatischen Hydroxy-terminierten Präpolymers mittels Fällungspolymerisation durch Umsetzung von mindestens einem aliphatischen Polyol mit mindestens einem Polyisocyanat in einem aprotischen Lösungsmittel und anschließender Abtrennung des erhaltenen Hydroxy-terminierten Präpolymers, wobei das erhaltene aliphatische Hydroxy-terminierte Präpolymer eine Kennzahl für den Umsatz der Hydroxygruppen von mindestens 0,850 bis maximal 0,970, ein Massenmittel der Molmasse Mw von < 30000 g/mol und einen Allophanatgehalt von < 0,1 mol-% aufweist;

ii. Umsetzung des in Schritt i. erhaltenen Hydroxy-terminierten Präpolymers mit einem Polyisocyanat in einem Extruder mittels Reaktivextrusion unter Erhalt des thermoplastischen Polyurethans, wobei das thermoplastische Polyurethan eine Kennzahl für den Umsatz der Hydroxygruppen von > 0,980, ein Massenmittel der Molmasse Mw von > 45000 g/mol und ein Allophanatgehalt von < 0,2 mol-% aufweist;

wobei die Kennzahl für den Umsatz der Hydroxygruppen, das Massenmittel der Molmasse Mw und der Allophanatgehalt jeweils mit den in der Beschreibung dargelegten Methoden bestimmt werden.

EP 4 458 875 A1

(52) Gemeinsame Patentklassifikation (CPC): (Forts.)

C-Sets
**C08G 18/10, C08G 18/7671;**
**C08G 18/10, C08G 18/7678**

## Beschreibung

Die vorliegende Erfindung betrifft ein Verfahren zur Herstellung eines thermoplastischen Polyurethans, das durch dieses Verfahren erhältliche thermoplastische Polyurethan sowie dessen Verwendung. Darüber hinaus betrifft die Erfindung ein Formteil, erhalten oder erhältlich durch die Verarbeitung des erfindungsgemäßen thermoplastischen Polyurethans.

## Stand der Technik

Thermoplastische Polyurethane (TPU) sind mit die ältesten bekannten Thermoplaste. Ein Herstellungsprozess für TPU, insbesondere aliphatische TPU, wurde bereits 1937 in DE728981C beschrieben. Die TPU werden dabei durch Umsetzung in einem Lösungsmittel (wie z.B. Chlorbenzen) hergestellt, aus dem sie in der Regel dann ausfallen. Es hat sich jedoch später gezeigt, dass die erreichten molekularen Kettenlängen ungenügend waren, um gute Polymereigenschaften zu erhalten. Höhermolekulare TPU sind so daher nicht zugänglich.

Aufgrund dessen wechselte man zu einem Schmelzeprozess. Bei der Herstellung von beispielsweise aliphatischen thermoplastischen Polyurethanen in der Schmelze werden dafür in einer ersten Stufe die reinen Monomere wie zum Beispiel 1,4-Butandiol (BDO) und 1,6-Hexamethylendiisocyanat (HDI) in einem Kessel zu einem OH-terminierten Präpolymer umgesetzt, wobei die Temperatur strikt kontrolliert werden muss (B.I.O.S. Final Report 1472, No 22, S. 48). Die Umsetzung muss dabei jedoch wegen ansteigender Viskosität und den damit verbunden Mischproblemen im Rührkessel auf ca. 80 % - 90 % begrenzt werden. Die zweite Stufe der Umsetzung wird dann in einem schweren Mischaggregat (heavy duty mixer) durch Zugabe von HDI (im Unterschuss; Kennzahl KZ ca. 0,98) zu dem Präpolymer zum Endprodukt durchgeführt, wobei fast 10 - 20 mol-% der Gesamtmenge an Isocyanat bei hohen Temperaturen hinzugegeben werden muss, was wiederum zu unerwünschten Nebenreaktion führt. Die Nachteile des Prozesses liegen daher unter anderem in der hohen benötigten Reaktionstemperatur und dem langen sowie schlechten Mischprozess, was zu einem Anwachsen von unerwünschten Nebenreaktionen führt. Außerdem zeigen die erhaltenen Produkte nicht einheitliche und teilweise unbefriedigende mechanischen Eigenschaften. Dieser Schmelzeprozess kann auch in abgewandelter Form erfolgen. Dabei werden die Monomere BDO und HDI in einem Loop Reaktor beziehungsweise alternativ in statischen Mischern (Fluitec Reaktoren) zum Präpolymer umgesetzt, welches in einem 2. Reaktionsschritt in einer Reaktivextrusion mit HDI zum finalen Polymer weiterreagiert (EP 3 838 956 A1). Die Nachteile eines relativ hohen Allophanatanteils und das Auftreten von Gelpartikeln können allerdings auch bei einer Begrenzung des Gesamtumsatzes (Unterschuß HDI, KZ 0,980) nicht vermieden werden.

Die vorgenannten Verfahren sind auf Grund ihres Aufwandes teuer und wegen ihrer Nachteile für die Herstellung von thermoplastischen Polyurethanen mit hohen Molmassen in Kombination mit geringen Allophanatgehalten sowie vorzugsweise konsistenten mechanischen Eigenschaften nicht geeignet.

Es besteht daher ein Bedarf an einem Verfahren zur Herstellung von thermoplastischen Polyurethanen, insbesondere aliphatischen thermoplastischen Polyurethanen, mit hohen Molmassen und geringen Allophanatgehalten.

## Aufgabe der Erfindung

Die Aufgabe der vorliegenden Erfindung bestand demnach in der Bereitstellung eines Verfahrens zur Herstellung von thermoplastischen Polyurethanen mit hohen Molmassen und geringen Allophanatgehalten. Im Besonderen sollte das Verfahren zu thermoplastischen Polyurethanen mit einer Kennzahl für den Umsatz der Hydroxygruppen von > 0,980, einem Massenmittel der Molmasse von > 45000 g/mol und einem Allophanatgehalt von < 0,25 mol-% führen. Außerdem sollten die thermoplastischen Polyurethane durch Weiterverarbeitung zu Formteilen führen, welche möglichst frei von Gelpartikeln sind und/oder weiterhin gute und vorzugsweise konsistente mechanische Eigenschaften, insbesondere eine gute Bruchdehnung und einen guten E-Modul aufweisen.

## Lösung der Aufgabe und detaillierte Beschreibung der Erfindung

Die Aufgabe wurde gelöst durch ein Verfahren zur Herstellung eines thermoplastischen Polyurethans, insbesondere eines aliphatischen thermoplastischen Polyurethans, umfassend die Schritte:

i. Herstellung eines aliphatischen Hydroxy-terminierten Präpolymers mittels Fällungspolymerisation durch Umsetzung von mindestens einem aliphatischen Polyol mit mindestens einem Polyisocyanat in einem aprotischen Lösungsmittel und anschließender Abtrennung des erhaltenen Hydroxy-terminierten Präpolymers, wobei das erhaltene aliphatische Hydroxy-terminierte Präpolymer eine Kennzahl für den Umsatz der Hydroxygruppen von mindestens 0,850 bis maximal 0,970, ein Massenmittel der Molmasse Mw von < 30000 g/mol und einen Allophanatgehalt von < 0,1 mol-% aufweist;

ii. Umsetzung des in Schritt i. erhaltenen Hydroxy-terminierten Präpolymers mit einem Polyisocyanat in einem Extruder mittels Reaktivextrusion unter Erhalt des thermoplastischen Polyurethans, wobei das thermoplastische Polyurethan eine Kennzahl für den Umsatz der Hydroxygruppen von > 0,980, ein Massenmittel der Molmasse Mw von > 45000 g/mol und ein Allophanatgehalt von < 0,2 mol-% aufweist;

wobei die Kennzahl für den Umsatz, das Massenmittel der Molmasse Mw und der Allophanatgehalt jeweils mit den weiter unten dargelegten Methoden bestimmt werden.

Ferner betrifft die Erfindung ein thermoplastisches Polyurethan, erhalten oder erhältlich nach dem erfindungsgemäßen Verfahren.

Außerdem betrifft die Erfindung die Verwendung eines erfindungsgemäßen Polyurethans in einem Extrusionsverfahren, Spritzgussverfahren, Pulversinterverfahren und/oder Schmelzeverfahren, insbesondere zur Herstellung von Formteilen und/oder Beschichtungen.

Schließlich betrifft die Erfindung ein Formteil erhalten oder erhältlich durch die Verarbeitung des erfindungsgemäßen thermoplastischen Polyurethans.

Im Zuge der Entwicklungsarbeiten, die zu der vorliegenden Erfindung geführt haben, wurde überraschenderweise festgestellt, dass die Kombination einer Fällungspolymerisation unter Herstellung eines Hydroxy-terminierten Präpolymers mit einer Kennzahl für den Umsatz der Hydroxygruppen von mindestens 0,850 bis maximal 0,970, einem Massenmittel der Molmasse Mw von < 30000 g/mol und einen Allophanatgehalt von < 0,1 mol-% mit einer anschließenden Reaktivextrusion des vorgenannten Präpolymers mit einem Polyisocyanat zu thermoplastischen Polyurethanen, insbesondere aliphatische thermoplastische Polyurethane, mit hohen Molmassen und geringen Allophanatgehalten führt.

Das Zahlenmittel der Molmasse (Mn), das Massenmittel der Molmasse (Mw) sowie das Zentrifugenmittel (Mz) des thermoplastischen Polyurethans wird im Rahmen der Erfindung mittels Gelpermeationschromatographie (GPC) bestimmt. Dazu wird die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7$\mu$m, 300 Å PSS PFG 7$\mu$m, 100 Å PSS PFG 7$\mu$m in dieser Reihenfolge (PSS Polymer Standards Service GmbH) |
| Entgasung: | Degasser PSS (PSS Polymer Standards Service GmbH) |
| | Injektionsvolumen: 100 Mikroliter |
| Temperatur: | 23 °C - 25 °C |
| Molmassen-Standard: | Polymethylmethacrylat-Standard-Kit (PSS Polymer Standards Service GmbH) |

Das Zahlenmittel der Molmasse (Mn bzw. $\overline{M}_n$) wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i}$$

in g/mol
wobei:

$M_i$ die molare Masse der Polymere der Fraktion $i$ ist, so dass $M_i < M_{i+1}$ für alle $i,$ in g/mol ist,
$n_i$ die Stoffmenge des Polymers der Fraktion $i,$ in mol ist.

Das Massenmittel der Molmasse (Mw bzw. $\overline{M}_w$) wird ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i}$$

in g/mol

wobei:

$M_i$ die molare Masse der Polymere der Fraktion *i* ist, so dass $M_i < M_{i+1}$ für alle *i*, in g/mol ist,
$n_i$ die Stoffmenge des Polymers der Fraktion *i,* in mol ist.

Das Zentrifugenmittel der Molmasse (Mz bzw. $\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i \, M_i{}^3}{\sum_i n_i \, M_i{}^2}$$

in g/mol
wobei:

$M_i$ die molare Masse der Polymere der Fraktion *i* ist, so dass $M_i < M_{i+1}$ für alle *i*, in g/mol ist,
$n_i$ die Stoffmenge des Polymers der Fraktion *i,* in mol ist.

Der Allophanatgehalt und die Kennzahl für den Umsatz der Hydroxygruppen des thermoplastischen Polyurethans wird mittels $^1$H-NMR bestimmt. Der Allophanatgehalt für das Hydroxy-terminierte Präpolymer ist auf das gesamte Präpolymer und für das thermoplastische Polymer auf das gesamte thermoplastische Polyurethan bezogen. Die Messung wird mit einem Bruker AV III HD 600 Spektrometer bei 600 MHz in DMSO-D6 bei 80 °C durchgeführt. Folgende Peaks werden dabei ausgewertet:

| | | | |
|---|---|---|---|
| U= | $CH_2$-NH | 2.98 ppm | $CH_2$ bei Urethan |
| O= | $CH_2$-OH | 3.43 ppm | $CH_2$ bei OH-Gruppen |
| N= | N-**H** | 6.6 ppm | Urethan |
| A= | N-**H** | 8.3-8.4 ppm | Allophanat |

Die Allophanat Konzentration beziehungsweise der Allophanatgehalt in mol-% wird dabei nach folgender Formel berechnet:

$$\text{Allophanat [mol\%]} = 100\ \% * A/\ (A+N)$$

Die Kennzahl für den Umsatz der Hydroxygruppen ergibt sich dann aus der Formel:

$$KZ = 1/\ (1+O/U)$$

Die Bestimmung von Gelpartikeln (Gelbestimmung) wird im Rahmen der Erfindung durch Spritzgießen des jeweiligen Polymers in einen Standardstab (Dimension 80 mm x 10 mm x 4 mm) durchgeführt. Der Stab wird mit der flachen Seite auf einen Leuchttisch gelegt. Die Gelpartikel werden mit dem bloßen Auge im Durchlicht als helle Flecken in der sonst homogenen Probe erkennbar. Zusätzlich werden die kreisförmigen Vertiefungen auf der glatten Oberfläche der Probekörper, die durch Gelpartikel nahe der Oberfläche erzeugt werden, gezählt. Um kleinere Fehler des Spritzgusses zu berücksichtigen wird bei einer Summe der gezählten Gelpartikel X < 5 die Probe als frei, bei 5 < X < 15 als wenig, 15 < X < 30 als viel und X > 30 als sehr viel mit Gelen belastet, gewertet.

Die Zugprüfung (zur Ermittlung der Bruchdehnung und des E-Moduls) wird in Anlehnung an die Prüfmethode DIN EN ISO 527 mit Probekörpern Typ 5A (DIN EN ISO 527-2, Dicke 2 mm) durchgeführt. Die Probekörper werden vor dem Versuch mindestens 24 Stunden bei Normbedingungen gelagert. Die Zugversuche erfolgen bei 22 °C und 50 % relativer Feuchte, durchgeführt mit einer Universalprüfmaschine Z010 der Fa. Zwick mit einer Geschwindigkeit von 10 mm/ min. Der E-Modul wird zwischen 0,05 % und 0,25 % Dehnung ermittelt mittels Sekante.

Für die Herstellung der Probekörper für die Bestimmung der Zugprüfung wird das Polymer bei 80 °C im Trockenschrank für 4 Stunden getrocknet und anschließend auf einem Mikroextruder MC 15 HT (15 mL) der Firma Xplore verarbeitet und mit dem dazugehörigen Spritzgußteil Micro moulder IM 12 in die benötigte Form gebracht.

Der Schmelzpunkt wird mittels DSC (Differential Scanning Calorimetry) mit einem DSC Q2000 V24.11 der Firma TA Instruments entsprechend DIN EN 61006 (November 2004) bestimmt. Eine Kalibrierung erfolgt durch die Temperatur des Schmelz-Onsets von Indium und Blei. Es werden ca. 10 mg Substanz in Normalkapseln eingewogen. Die Messung erfolgt durch 2 Aufheizungen von - 20 °C bis +220 °C bei einer Heizrate von 20 K/ min mit anschließender Abkühlung mit einer Kühlrate von 20 K/ min. Die Kühlung erfolgt durch flüssigen Stickstoff. Als Spülgas wird Stickstoff verwendet. Die erste Aufheizung löscht die thermische Vorgeschichte der Probe. Die angegebenen Werte basieren jeweils auf der Auswertung der ersten Abkühlkurve und der 2. Aufheizkurve.

Die Reaktionstemperatur bei der Umsetzung in Schritt i. beträgt vorzugsweise von 50 bis 150 °C, weiter bevorzugt von 100 bis 145 °C, wobei die Reaktionstemperatur vorzugsweise mindestens 5 Minuten, weiter bevorzugt 15 bis 1200 Minuten, noch weiter bevorzugt 30 bis 300 Minuten aufrechterhalten wird.

Das aliphatische Polyol in Schritt i. ist vorzugsweise ausgewählt aus der Gruppe, umfassend oder bestehend aus 1,3-Propandiol, 1,4-Butandiol, 1,5-Pentandiol, 1,6-Hexandiol, 1,8-Octandiol, 1,10-Decandiol, 1,12-Dodecandiol oder Mischungen davon, wobei das aliphatische Polyol weiter bevorzugt 1,4-Butandiol enthält oder daraus besteht.

Weiterhin ist bevorzugt, dass das aliphatische Polyol in Schritt i. eine mittlere molare Masse zwischen 60 g/mol und 200 g/mol aufweist. Die mittlere molare Masse errechnet sich dabei aus der Summe aller Produkte der jeweiligen Molmassen und Molbrüche der verwendeten Polyole.

Besonders bevorzugt enthält das aliphatische Polyol in Schritt i. ≥ 90 mol-%, besonders bevorzugt > 95 mol-% 1,4-Butandiol.

Außerdem ist es bevorzugt, dass das Polyisocyanat in Schritt i. aus der Gruppe ausgewählt ist, umfassend oder bestehend aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylen-Diisocyanaten, insbesondere m-Xylylen-Diisocyanat, oder Mischungen davon.

Ferner ist das aprotische Lösungsmittel in Schritt i. vorzugsweise aus der Gruppe ausgewählt, umfassend oder bestehend aus Aromaten, halogenierten Aromaten, Estern, Ethern, Ketonen, Nitrilen und Carbonaten, besonders bevorzugt Chlorbenzol, Aceton, Methylethylketon, Butylacetat, Ethylacetat, Methoxypropylacetat, Acetonitril, Tetrahydrofuran, Diethylcarbonat,Dimethylcarbonat oder Mischungen davon.

Das in Schritt i. erhaltene aliphatische Hydroxy-terminierte Präpolymer weist bevorzugt < 2,0 Gew.-%, weiter bevorzugt von 0 bis 0,5 Gew.-% des eingesetzten Lösungsmittels auf, bezogen auf das Gesamtgewicht des aliphatischen Hydroxy-terminierten Präpolymers. Darüber hinaus weist das erhaltene aliphatische Hydroxy-terminierte Präpolymer bevorzugt eine Kennzahl für den Umsatz der Hydroxygruppen von 0,90 bis 0,96, bevorzugt ein Massenmittel der Molmasse Mw von 10000 bis 30000 g/mol, weiter bevorzugt von 20000 bis 30000 g/mol, und/oder bevorzugt einen Allophanatgehalt von 0 bis 0,1 mol-%, weiter bevorzugt von 0,01 bis 0,05 mol-% auf. Außerdem ist es bevorzugt, dass die Umsetzung von aliphatischem Polyol mit dem Polyisocyanat in Schritt i. bei einer Isocyanat-Kennzahl von 0,850 bis 0,970, bevorzugt von 0,900 bis 0,960 erfolgt. Vorzugsweise fällt das erhaltene Hydroxy-terminierte Präpolymer als Feststoff in dem Lösungsmittel aus und bildet ein Dispersion. Das als Feststoff erhaltene Hydroxy-terminierte Präpolymer kann anschließend abgetrennt, insbesondere mittels Filtration, Zentrifugation und/oder Abdampfen des Lösungsmittel, und gegebenenfalls mit einem Lösungsmittel, vorzugsweise demselben Lösungsmittel, in dem das Präpolymer ausgefallen ist, gewaschen werden. Optional kann der abfiltrierte Feststoff noch zusätzlich getrocknet werden (beispielsweise in einem Schaufeltrockner und/oder im Vakuum bei erhöhten Temperaturen bis vorzugsweise zur Gewichtskonstanz).

Außerdem ist bevorzugt, dass das Hydroxy-terminierte Präpolymer zu ≥ 70,0 Gew.-%, besonders bevorzugt zu ≥ 90,0 Gew.-% in Schritt i. ausfällt, bezogen auf die Summe der in Schritt i. eingesetzten Polyole und Polyisocyanate und bestimmt durch gravimetrische Messung nach Filtration der Dispersion und Trocknung des Präpolymers.

Das Polyisocyanat aus Schritt ii. weist vorzugsweise eine Funktionalität zwischen 1,5 und 2,5 auf und ist bevorzugt aus der Gruppe ausgewählt, umfassend oder bestehen aus einem aliphatischen Polyisocyanat, einem aromatischen Polyisocyanat, einem Isocyanat-terminierten Präpolymer oder Mischungen davon. Das Polyisocyanat aus Schritt ii. kann insbesondere aus der Gruppe ausgewählt sein, umfassend oder bestehend aus Naphthylen-1,5-diisocyanat, Methylendi(phenylisocyanat), Toluyldiisocyanat, 1,5-Pentandiisocyanat, 1,6-Hexandiisocyanat, Isophorondiisocyanat, 1,1'-Methylenbis(4-isocyanatocyclohexan), Xylylen-Diisocyanaten, insbesondere m-Xylylen-Diisocyanat, Isocyanat-terminierte Präpolymere aus den vorgenannten Verbindungen oder Mischungen davon, wobei dieses Polyisocyanat besonders bevorzugt Naphthylen-1,5-diisocyanat und/oder Methylendi(phenylisocyanat) enthält oder daraus besteht.

Das nach Schritt ii. erhaltene thermoplastische Polyurethan weist bevorzugt eine Kennzahl für den Umsatz der Hydroxygruppen von 0,980 bis 1,000, weiter bevorzugt von 0,985 bis 0,995, ein Massenmittel der Molmasse Mw von 45000 bis 200000 g/mol, weiter bevorzugt von 50000 bis 150000 g/mol, noch weiter bevorzugt von 60000 bis 100000 g/mol, besonders bevorzugt von 70000 bis 80000 g/mol und/oder einen aliphatischen Allophanatgehalt von 0 bis 0,2 mol-%, weiter bevorzugt von 0,01 bis 0,1 mol-% auf. Außerdem ist es bevorzugt, dass die Umsetzung des Hydroxy-terminierten Präpolymers mit einem Polyisocyanat in Schritt ii. bei einer Isocyanat-Kennzahl von 0,975 bis 1,05, weiter bevorzugt 0,98 bis 0,995 erfolgt.

Ferner ist es bevorzugt, dass das in Schritt ii. erhaltene thermoplastische Polyurethan zu ≥ 75,0 mol-%, bevorzugt ≥ 90,0 mol-% und besonders bevorzugt ≥ 94,0 mol-% aus aliphatischen Polyisocyanaten aufgebaut ist, bezogen auf die Summe aller eingesetzten Polyisocyanate aus Schritt i. und Schritt ii..

Das Verhältnis der eingesetzten gesamten Molmenge Isocyanatgruppen in Bezug auf die eingesetzte gesamte Molmenge Hydroxygruppen in den Schritten i. und ii. beträgt vorzugsweise von 0,982 bis 1,200, weiter bevorzugt von 0,990 bis 1,050 und besonders bevorzugt von 0,995 bis 1,020, wobei sich die Molmenge der Isocyanatgruppen aus Schritt i. nur auf abreagiertes Polyisocyanat bezieht.

**Ausführungsformen:**

Die Erfindung betrifft insbesondere folgende Ausführungsformen:

Nach einer ersten Ausführungsform betrifft die Erfindung ein Verfahren zur Herstellung eines thermoplastischen Polyurethans, umfassend die Schritte:

i. Herstellung eines aliphatischen Hydroxy-terminierten Präpolymers mittels Fällungspolymerisation durch Umsetzung von mindestens einem aliphatischen Polyol mit mindestens einem Polyisocyanat in einem aprotischen Lösungsmittel und anschließender Abtrennung des erhaltenen Hydroxy-terminierten Präpolymers, wobei das erhaltene aliphatische Hydroxy-terminierte Präpolymer eine Kennzahl für den Umsatz der Hydroxygruppen von mindestens 0,850 bis maximal 0,970, ein Massenmittel der Molmasse Mw von < 30000 g/mol und einen Allophanatgehalt von < 0,1 mol-% aufweist;

ii. Umsetzung des in Schritt i. erhaltenen Hydroxy-terminierten Präpolymers mit einem Polyisocyanat in einem Extruder mittels Reaktivextrusion unter Erhalt des thermoplastischen Polyurethans, wobei das thermoplastische Polyurethan eine Kennzahl für den Umsatz der Hydroxygruppen von > 0,980, ein Massenmittel der Molmasse Mw von > 45000 g/mol und ein Allophanatgehalt von < 0,2 mol-% aufweist;

wobei die Kennzahl für den Umsatz der Hydroxygruppen, das Massenmittel der Molmasse Mw und der Allophanatgehalt jeweils mit den in der Beschreibung dargelegten Methoden bestimmt werden.

Nach einer zweiten Ausführungsform betrifft die Erfindung ein Verfahren nach Ausführungsform 1, dadurch gekennzeichnet, dass die Reaktionstemperatur bei der Umsetzung in Schritt i. von 50 bis 150 °C, bevorzugt von 100 bis 145 °C beträgt, wobei die Reaktionstemperatur vorzugsweise mindestens 5 Minuten, weiter bevorzugt 15 bis 1200 Minuten, noch weiter bevorzugt 30 bis 300 Minuten aufrechterhalten wird.

Nach einer dritten Ausführungsform betrifft die Erfindung ein Verfahren nach Ausführungsform 1 oder 2, dadurch gekennzeichnet, dass das aliphatische Polyol in Schritt i. aus der Gruppe ausgewählt ist, umfassend oder bestehend aus 1,3-Propandiol, 1,4-Butandiol, 1,5-Pentandiol, 1,6-Hexandiol, 1,8-Octandiol, 1,10-Decandiol, 1,12-Dodecandiol oder Mischungen davon, wobei das aliphatische Polyol vorzugsweise 1,4-Butandiol enthält oder daraus besteht.

Nach einer vierten Ausführungsform betrifft die Erfindung ein Verfahren nach einer der vorstehenden Ausführungsformen, dadurch gekennzeichnet, dass das Polyisocyanat in Schritt i. aus der Gruppe ausgewählt ist, umfassend oder bestehend aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylen-Diisocyanaten, insbesondere m-Xylylen-Diisocyanat, oder Mischungen davon.

Nach einer fünften Ausführungsform betrifft die Erfindung ein Verfahren nach einer der vorstehenden Ausführungsformen, dadurch gekennzeichnet, dass das aprotische Lösungsmittel in Schritt i. aus der Gruppe ausgewählt ist, umfassend oder bestehend aus Aromaten, halogenierten Aromaten, Estern, Ethern, Ketonen, Nitrilen und Carbonaten, besonders bevorzugt Chlorbenzol, Aceton, Methylethylketon, Butylacetat, Ethylacetat, Methoxypropylacetat, Acetonitril, Tetrahydrofuran, Diethylcarbonat, Dimethylcarbonat oder Mischungen davon.

Nach einer sechsten Ausführungsform betrifft die Erfindung ein Verfahren nach einer der vorstehenden Ausführungsformen, dadurch gekennzeichnet, dass die Umsetzung von aliphatischem Polyol mit dem Polyisocyanat in Schritt i. bei einer Isocyanat-Kennzahl von 0,850 bis 0,970, bevorzugt von 0,900 bis 0,960 erfolgt.

Nach einer siebten Ausführungsform betrifft die Erfindung ein Verfahren nach einer der vorstehenden Ausführungsformen, dadurch gekennzeichnet, dass das in Schritt i. erhaltene aliphatische Hydroxy-terminierte Präpolymer < 2,0 Gew.-%, weiter bevorzugt von 0 bis 0,5 Gew.-% des eingesetzten Lösungsmittels aufweist, bezogen auf das Gesamtgewicht des aliphatischen Hydroxy-terminierten Präpolymers.

Nach einer achten Ausführungsform betrifft die Erfindung ein Verfahren nach einer der vorstehenden Ausführungsformen, dadurch gekennzeichnet, dass das erhaltene Hydroxy-terminierte Präpolymer eine Kennzahl für den Umsatz der Hydroxygruppen von 0,90 bis 0,96, ein Massenmittel der Molmasse Mw von 10000 bis 30000 g/mol, bevorzugt von 20000 bis 30000 g/mol, und/oder einen Allophanatgehalt von 0 bis 0,1 mol-%, bevorzugt von 0,01 bis 0,05 mol-% aufweist.

Nach einer neunten Ausführungsform betrifft die Erfindung ein Verfahren nach einer der vorstehenden Ausfiihrungsformen, dadurch gekennzeichnet, dass das Polyisocyanat aus Schritt ii. eine Funktionalität zwischen 1,5 und 2,5 aufweist und aus der Gruppe ausgewählt ist, umfassend oder bestehen aus einem aliphatischen Polyisocyanat, einem aromatischen Polyisocyanat, einem Isocyanat-terminierten Präpolymer oder Mischungen davon.

Nach einer zehnten Ausführungsform betrifft die Erfindung ein Verfahren nach einer der vorstehenden Ausfiihrungsformen, dadurch gekennzeichnet, dass das Polyisocyanat aus Schritt ii. aus der Gruppe ausgewählt ist, umfassend oder bestehend aus Naphthylen-1,5-diisocyanat, Methylendi(phenylisocyanat), Toluyldiisocyanat, 1,5-Pentandiisocyanat, 1,6-Hexandiisocyanat, Isophorondiisocyanat, 1,1'-Methylenbis(4-isocyanatocyclohexan), Xylylen-Diisocyanaten, insbesondere m-Xylylen-Diisocyanat, Isocyanat-terminierte Präpolymere aus den vorgenannten Verbindungen oder Mischungen davon, wobei das Polyisocyanat aus Schritt ii. vorzugsweise Naphthylen-1,5-diisocyanat und/oder Methylendi(phenylisocyanat) enthält oder daraus besteht.

Nach einer elften Ausfiihrungsform betrifft die Erfindung ein Verfahren nach einer der vorstehenden Ausführungsformen, dadurch gekennzeichnet, dass das Verhältnis der eingesetzten gesamten Molmenge Isocyanatgruppen in Bezug auf die eingesetzte gesamte Molmenge Hydroxygruppen in den Schritten i. und ii. von 0,982 bis 1,200, bevorzugt von 0,990 bis 1,050 und besonders bevorzugt von 0,995 bis 1,020 beträgt, wobei sich die Molmenge der Isocyanatgruppen aus Schritt i. nur auf abreagiertes Polyisocyanat bezieht.

Nach einer zwölften Ausfiihrungsform betrifft die Erfindung ein Verfahren nach einer der vorstehenden Ausführungsformen, dadurch gekennzeichnet, dass das thermoplastische Polyurethan eine Kennzahl für den Umsatz der Hydroxygruppen von 0,980 bis 1,00, bevorzugt von 0,985 bis 0,995, ein Massenmittel der Molmasse Mw von 45000 bis 200000 g/mol, bevorzugt von 50000 bis 150000 g/mol, weiter bevorzugt von 60000 bis 100000 g/mol, noch weiter bevorzugt von 70000 bis 80000 g/mol und/oder einen aliphatischen Allophanatgehalt von 0 bis 0,2 mol-%, bevorzugt von 0,01 bis 0,1 mol-% aufweist.

Nach einer dreizehnten Ausführungsform betrifft die Erfindung ein thermoplastisches Polyurethan, erhalten oder erhältlich nach einem Verfahren gemäß einer der Ausführungsformen eins bis zwölf.

Nach einer vierzehnten Ausführungsform betrifft die Erfindung die Verwendung eines thermoplastischen Polyurethans gemäß Ausführungsform dreizehn in einem Extrusionsverfahren, Spritzgussverfahren, Pulversinterverfahren und/oder Schmelzeverfahren, insbesondere zur Herstellung von Formteilen und/oder Beschichtungen.

Nach einer fünfzehnten Ausführungsform betrifft die Erfindung ein Formteil erhalten oder erhältlich durch die Verarbeitung eines thermoplastischen Polyurethans gemäß Ausführungsform dreizehn.

## Beispiele

Die vorliegende Erfindung wird anhand der nachfolgenden Beispiele näher erläutert.

**Messmethoden:**

Folgende Messmethoden wurden verwendet:

GPC-Methode zur Bestimmung von Zahlenmittel der Molmasse Mn, Massenmittel der Molmasse Mw und Zentrifugenmittel der Molmasse Mz:

Bestimmung mittels Gelpermeationschromatographie (GPC). Dazu wurde die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH); |
| Detektor: | Smartline RI-Detektor 2300 (Knauer Wissenschaftliche Geräte GmbH); |
| Säulen: | 1 Vorsäule, 1000 Ä PSS PFG 7$\mu$m, 300 Ä PSS PFG 7$\mu$m, 100 Ä PSS; PFG 7$\mu$m in dieser Reihenfolge (PSS Polymer Standards Service GmbH); |
| Entgasung: | Degasser PSS (PSS Polymer Standards Service GmbH); |
| Injektionsvolumen: | 100 Mikroliter; |
| Temperatur: | 23 °C - 25 °C; |
| Molmassen-Standard: | Polymethylmethacrylat-Standard-Kit (PSS Polymer Standards Service GmbH). |

Das Zahlenmittel der Molmasse ($\overline{M}_n$) wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i}$$

in g/mol
wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i}$$

in g/mol
wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2}$$

in g/mol
wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Allophanatgehalt und Kennzahl für den Umsatz der Hydroxygruppen:

Der Allophanatgehalt und die Kennzahl für den Umsatz der Hydroxygruppen wurde mittels $^1$H-NMR bestimmt. Die Messungen wurden mit einem Bruker AV III HD 600 Spektrometer bei 600 MHz in DMSO-D6 bei 80 °C durchgeführt.
Folgende Peaks wurden ausgewertet:

| | | | |
|---|---|---|---|
| U=$CH_2$-NH | | 2.98 ppm | $CH_2$ bei Urethan |
| O=$CH_2$-OH | | 3.43 ppm | $CH_2$ bei OH-Gruppen |
| N=N-**H** | | 6.6 ppm | Urethan |
| A= | N-**H** | 8.3-8.4 ppm | Allophanat |

Die aliphatische Allophanat Konzentration in mol-% wurde nach folgender Formel berechnet:

$$\text{Allophanat [mol-\%]} = 100\,\% * A/(A+N)$$

Die Kennzahl für den Umsatz der Hydroxygruppen ergibt sich aus der Formel:

$$KZ = 1/(1+O/U)$$

Differentialkalorimetrie (DSC):

Der Schmelzpunkt wurde mittels DSC (Differential Scanning Calorimetry) mit einem DSC Q2000 V24.11 der Firma TA Instruments entsprechend DIN EN 61006 (November 2004) bestimmt. Eine Kalibrierung erfolgte durch die Temperatur des Schmelz-Onsets von Indium und Blei. Es wurden ca 10 mg Substanz in Normalkapseln eingewogen. Die Messung erfolgte durch 2 Aufheizungen von -20 °C bis +220 °C bei einer Heizrate von 20 K/ min mit anschließender Abkühlung mit einer Kühlrate von 20 K/ min. Die Kühlung erfolgte durch flüssigen Stickstoff. Als Spülgas wurde Stickstoff verwendet. Die erste Aufheizung löscht die thermische Vorgeschichte der Probe. Die angegebenen Werte basieren jeweils auf der Auswertung der ersten Abkühlkurve und der 2. Aufheizkurve.

Herstellung Probekörper für die Zugversuche:

Das Polymer wurde bei 80 °C im Trockenschrank für 4 Stunden getrocknet und anschließend auf einem Mikroextruder MC 15 HT (15 mL) der Firma Xplore verarbeitet und mit dem dazugehörigen Spritzgußteil Micro moulder IM 12 in die benötigte Form gebracht.

Bestimmung des nichtreagierten Isocyanatgehaltes Schritt i

Eine genau abgewogene Menge des Reaktionsgemisches (ca 10-20 g) nach beendeter Reaktion wurde mit 50 mL getrocknetem Aceton bei Raumtemperatur verdünnt und eine definierte Menge n-Dibutylamin im Überschuss (bezogen auf zu erwartendes Isocyanat) zugegeben. Die Mischung wurde für ca. 1 min gerührt, Indikator (0,1 Gew.-% Bromphenolblau in Aceton) zugegeben und anschließend das überschüssige Amin mit Salzsäure zurück titriert. Aus dem verbrauchten Amin wurde die Restmenge Isocyanat errechnet.

Bestimmung des E-Moduls und der Bruchdehnung:

Die Zugprüfung wurde in Anlehnung an die Prüfmethode DIN EN ISO 527 mit Probekörpern Typ 5A (DIN EN ISO 527-2, Dicke 2 mm) durchgeführt. Die Probekörper wurden vor dem Versuch mindestens 24 h bei Normbedingungen gelagert. Die Zugversuche erfolgten bei 22 °C und 50 % relativer Feuchte, durchgeführt mit einer Universalprüfmaschine Z010 der Fa. Zwick mit einer Geschwindigkeit von 10 mm/ min. Der E-Modul wurde zwischen 0,05 % und 0,25 % Dehnung ermittelt mittels Sekante.

Gelbestimmung:

Das jeweilige Polymer-Pulver wurde in einen Standardstab (Dimension 80 mm x 10 mm x 4 mm) spritzgegossen. Der Stab wurde mit der flachen Seite auf einen Leuchttisch gelegt. Die Gelpartikel waren mit dem bloßen Auge im Durchlicht als helle Flecken in der sonst homogenen Probe erkennbar. Zusätzlich wurden die kreisförmigen Vertiefungen auf der glatten Oberfläche der Probekörper, die durch Gelpartikel nahe der Oberfläche erzeugt werden, gezählt. Um kleinere Fehler des Spritzgusses zu berücksichtigen wurde bei einer Summe der gezählten Gelpartikel $X < 5$ die Probe als frei, bei $5 < X < 15$ als wenig, $15 < X < 30$ als viel und $X > 30$ als sehr viel mit Gelen belastet, gewertet.

**Materialien:**

Es wurden die folgenden Materialien eingesetzt:

Aliphatisches Polyol:

- 1,4-Butandiol (BDO) (Firma: Ashland), Reinheit: $\geq 99$ % Gew.-%;

Polyisocyanat:

- 1,6-Hexamethylendiisocyanat (HDI) (Firma: Covestro AG); Reinheit: $\geq 99$ % Gew.-%;
- Naphthylen-1,5-diisocyanat (NDI) (Firma: Covestro AG); Reinheit: $\geq 99$ % Gew.-%;
- Diphenylmethan-4,4'-diisocyanat (MDI) (Firma: Covestro AG); Reinheit: $\geq 99$ % Gew.-%;
- Desmodur® XP 2617 (Firma: Covestro AG); ein auf HDI und Polyether basiertes lineares Präpolymer mit einer Funktion von 2 und einem NCO-Gehalt von 12,5 Gew.-%

Aprotisches Lösungsmittel:

- Chlorbenzol in Analysenqualität, bezogen von der Firma Azelis Deutschland GmbH
- o-Dichlorbenzen 99 %, bezogen von der Firma Acros Organics

**Experimenteller Teil:**

Versuch 1: 1. Verfahrensstufe zu Hydroxy-terminiertem Präpolymer (Nachstellung Patent O. Baver DE728981C)

Es wurden 800 mL Chlorbenzen und 135,0 g (1,5 mol) BDO in einem 2 L Reaktionsgefäß mit Thermometer, Rückflußkühler und mechanischen Rührer bei 20 °C eingefüllt. Anschließend wurden über einen Tropftrichter 123,5 g (0,735 mol) HDI unter Rühren schnell zugegeben. Die Mischung wurde nun auf dem Ölbad langsam bis zum Rückfluß erwärmt. Nun wurden weitere 123,5 g (0,735 mol) HDI mit Tropftrichter unter Rühren so zugegeben, dass die Mischung am Rückfluß sanft siedete. Nach beendeter Zugabe wurde die Mischung weitere 2 Stunden am Rückfluß erhitzt. Das Polymer fiel dabei als weißes Pulver aus. Die Mischung wurde abfiltriert (Nutsche) und der Rückstand mit wenig Chlorbenzol nachgewaschen. Der weiße Feststoff wurde im Vakuum bei ca 80 °C bis zur Gewichtskonstanz getrocknet. Das $^1$H-NMR zeigte kein Allophanatsignal. Die Kennzahl für den Umsatz der Hydroxygruppen wurde mit 0,958 Hydroxy-terminiertes Polymer mittels $^1$H-NMR bestimmt. Die Polymermassen wurden mittels GPC ermittelt (siehe Tabelle 1).

Versuche 2a bis h: 2. Verfahrensstufe mit NDI, MDI und Desmodur XP 2617

Es wurden im Umluftofen (100 °C; 2 Stunden) getrocknetes, Hydroxy-terminiertes Präpolymerpulver aus Versuch 1 mit Kennzahl (KZ: 0,958) mit Isocyanat-Pulver (NDI, MDI) (Mengen siehe nachstehende Tabelle 1) im Mörser intensiv vorgemischt und ca. 15 g der Mischung in einem Mikroextruder MC 15 HT (15 mL) der Firma Xplore verarbeitet (195 °C; 50 rpm; 3 Minuten) und mit dem dazugehörigen Spritzgußteil Micro moulder IM 12 (Formtemperatur 80 °C; Düsentemperatur 195 °C; 6 bar) in die benötigte Form gebracht. Im Fall des flüssigen Desmodur XP 2617 wurden zunächst ca. 80 Gew.-% des Präpolymers in den Extruder gegeben und aufgeschmolzen. Dann wurde das Desmodur XP 2617 und anschließend das restliche Präpolymer zugefügt. Die Ergebnisse (Allophanatgehalt, Kennzahl für den Umsatz der Hydroxygruppen (Umsatz KZ), Massenmittel der Molmasse Mw, Zahlenmittel der Molmasse Mn, Zentrifugenmittel der Molmasse Mz, E-Modul und Bruchdehnungen) sind in der nachstehenden Tabelle 1 zusammengefasst.

**Tabelle 1**

| Versuch | Isocyanat | Menge Isocyanat [mol-%][1] | Äquivalente Isocyanat-gruppen zu Hydroxy-gruppen[2] | Allophanat [mol-%] (Umsatz KZ) | Mw [g/mol] Mn [g/mol] Mz [g/mol] | E-Modul [MPa] | Bruch-dehnung [%] |
|---|---|---|---|---|---|---|---|
| 1 (Vgl.) | - | - | 0,958 | 0 (0,958) | 24523 7801 45591 | zu spröde[3] | zu spröde[3] |
| 2a (Ref.) | NDI | 1 | 0,968 | 0,1 (0,971) | 34598 9488 66625 | zu spröde[3] | zu spröde[3] |
| 2b (Ref.) | NDI | 2 | 0,978 | 0 (0,978) | 37221 10534 72007 | zu spröde[3] | zu spröde[3] |
| 2c (Ref.) | NDI | 3 | 0,988 | 0,1 (0.978) | 43845 11125 87513 | zu spröde[3] | zu spröde[3] |
| 2d (Erf.) | NDI | 4 | 0,998 | 0 (0.987) | 48710 12420 91856 | 1937 | 217 |

(fortgesetzt)

| Versuch | Isocyanat | Menge Isocyanat [mol-%][1] | Äquivalente Isocyanat-gruppen zu Hydroxy-gruppen[2] | Allophanat [mol-%] (Umsatz KZ) | Mw [g/mol] Mn [g/mol] Mz [g/mol] | E-Modul [MPa] | Bruch-dehnung [%] |
|---|---|---|---|---|---|---|---|
| 2c (Erf.) | NDI | 5 | 1,008 | 0,1 (0,991) | 97591 13245 338682 | 1918 | 240 |
| 2f (Erf.) | MDI | 4 | 0,998 | 0 (0,988) | 64224 16771 126861 | 1733 | 145 |
| 2g (Erf.) | MDI | 5 | 1,008 | 0 (0,991) | 70808 15905 141124 | 1971 | 206 |
| 2h (Erf.) | Desmodur XP 2617 | 5 | 1,008 | 0 (nicht bestimmt wegen Überlagerung) | 89857 12797 296660 | 1139 | 155 |
| [1] Menge Isocyanatgruppen in Schritt ii.; [2] Verhältnis Isocyanatgruppen zu Hydroxygruppen abzgl unreagiertes Polyiso-cyanat aus Schritt i; [3] Die Zugprüfung ergab keine sinnvollen Werte, da die Testkörper zu schnell zerbrachen; Vgl. = Vergleichsbeispiel; Ref. = Referenzbeispiel; Erf. = Erfindungsgemäßes Beispiel. | | | | | | | |

Versuch 3: Nachstellung Patent O.Baver DE728981C analog des dortigen Beispiels 24 (nicht erfindungsgemäß)

Es wurden 100,0 g (1,11 mol) 1,4-Butandiol in einem 500 mL Kolben unter Stickstoff bei 20 °C vorgelegt. Anschließend wurden zügig 120,0 g 1,6- Hexamethylenediisocyanat (HDI) unter Stickstoff zugegeben und unter Rühren die Masse zusammen mit dem Ölbad langsam auf 190 °C erwärmt. Dann wurden die restlichen 62,7 g (insgesamt 1,088 mol) HDI unter stetem Rühren langsam zugegeben, so dass die Temperatur 200 °C nicht überstieg. Nach beendeter Zugabe wurde noch weitere 20 Minuten bei 200 °C gerührt, das Produkt in eine Aluminiumschale gegossen und abkühlen gelassen. Anschließend lag das Produkt über Nacht im Wasser, um mögliche Restspuren HDI zu beseitigen. Das weiße Polymer wurde abgetrocknet und im Ofen bei 80 °C 2 Stunden getrocknet. Im NMR Spektrum wurden 0,5 mol-% Allophanat gefunden. Die Kennzahl des Umsatzes der Hydroxygruppen wurde mittels $^1$H-NMR mit 0,970 bestimmt. Die GPC ergab Mw: 60350 g/mol; Mn: 17920 g/mol; Mz: 137230 g/mol. DSC ergab eine Schmelztemperatur Tm 182 °C. Die Zugprüfung ergab einen E-Modul von 1330 MPa und eine Bruchdehnung von 223 %. Die Spritzkörper zeigten viele Gelpartikel an der Oberfläche und im Durchlicht.

Versuch 4: Nachstellung Patent EP 3 838 956 A1 analog des dortigen Beispiels 3 (nicht erfindungsgemäß)

Entsprechend der Vorschrift für das erfinderische Beispiel 3 in Patent EP 3 838 956 A1 wurde HDI und BDO mit einer Kennzahl von 0,970 umgesetzt. Das erhaltene weiße Polymergranulat wurde im Ofen bei 80 °C 2 Stunden getrocknet. Im NMR Spektrum wurden 0,9 mol-% Allophanat gefunden. Die Kennzahl des Umsatzes der Hydroxygruppen wurde mittels $^1$H-NMR mit 0,969 bestimmt. Die GPC ergab Mw: 148700 g/mol; Mn: 12850 g/mol; Mz: 869530 g/mol. DSC ergab eine Schmelztemperatur Tm 177 °C. Die Zugprüfung ergab einen E-Modul von 1503 MPa und eine Bruch-dehnung von 84 %. Die Spritzkörper zeigten sehr viele Gelpartikel an der Oberfläche und im Durchlicht.

Versuch 5: Nachstellung Patent O.Baver DE728981C analog des dortigen Beispiels 16 (nicht erfindungsgemäß)

Es wurden 720 mL Chlorbenzen, 80 mL o-Dichlorbenzen und 135,0 g (1,5 mol) BDO in einem 2 L Reaktionsgefäß mit Thermometer, Rückflußkühler und mechanischen Rührer bei 20 °C eingefüllt. Anschließend wurden über einen Tropftrichter 123,5 g (0,735 mol) HDI unter Rühren schnell zugegeben. Die Mischung wurde nun auf dem Ölbad langsam bis zum Rückfluß erwärmt. Dann wurden weitere 123,5 g (0,735 mol) HDI mittels Tropftrichter unter Rühren so zugegeben, dass die Mischung am Rückfluß sanft siedete. Nach beendeter Zugabe wurde die Mischung weitere 2 Stunden am Rückfluß erhitzt. Das Polymer fiel dabei als weißes Pulver aus. Die Mischung wurde abfiltriert (Nutsche) und der Rückstand mit wenig Chlorbenzol nachgewaschen. Der weiße Feststoff wurde nun im Vakuum bei ca 80 °C bis zur Gewichtskonstanz getrocknet. Die Ausbeute betrug 370 g (97 %). Im NMR Spektrum wurden 0,15 mol-% Allophanat gefunden. Die Kennzahl des Umsatzes der Hydroxygruppen wurde mittels $^1$H-NMR mit 0,966 bestimmt. Die GPC ergab Mw: 28670 g/mol; Mn: 9330 g/mol; Mz: 52012 g/mol. DSC ergab eine Schmelztemperatur Tm 184 °C. Die Zugprüfung ergab einen E-Modul von 1981 MPa und eine Bruchdehnung von 16 %. Die Spritzkörper zeigten keine Gelpartikel.

Versuch 6: 1. Verfahrensschritt bei verschiedenen Temperaturen mit o-Dichlorbenzen (nicht erfindungsgemäß)

a. Bei 110 °C
Es wurden 100 mL ortho-Dichlorbenzen, 10,03 g (0,11 mol) BDO, 0,16 g (1,25 mmol) n-Octanol sowie 9,49 g (0,056 mol) HDI in einem 250 mL Reaktionsgefäß mit Thermometer, Rückflußkühler und mechanischen Rührer bei 20 °C eingefüllt. Die Mischung wurde auf dem Ölbad langsam bis 110 °C erwärmt. Dann wurden weitere 9,49 g (0,056 mol) HDI mit Tropftrichter unter Rühren so zugegeben, dass die Temperatur der Mischung 110 °C nicht überstieg. Nach beendeter Zugabe wurde die Mischung weitere 5 Stunden bei 110 °C erhitzt. Die Mischung wurde auf 20 °C unter ständigem Rühren abgekühlt. Das Polymer fiel dabei als weißes Pulver aus. Die Mischung wurde abfiltriert (Nutsche) und der Rückstand 3 mal mit je 100 mL Aceton nachgewaschen. Der weiße Feststoff wurde anschließend im Vakuum bei 80 °C bis zur Gewichtskonstanz getrocknet. Die Ausbeute betrug 25,6 g. Im NMR Spektrum wurde kein Allophanat gefunden. Die Kennzahl des Umsatzes der Hydroxygruppen wurde mittels $^1$H-NMR mit 0,940 bestimmt. Die GPC ergab Mw: 16337 g/mol; Mn: 5737 g/mol; Mz: 32101 g/mol.

b. Bei 130 °C
Der Versuch wurde wie unter a.) beschrieben aber bei 130 °C durchgeführt. Die Ausbeute betrug 25,6 g. Im NMR Spektrum wurde kein Allophanat gefunden. Die Kennzahl des Umsatzes der Hydroxygruppen wurde mittels $^1$H-NMR mit 0,968 bestimmt. Die GPC ergab Mw: 30846 g/mol; Mn: 9721 g/mol; Mz: 59423 g/mol. Die Zugprüfung ergab einen E-Modul von 1985 MPa und eine Bruchdehnung von 16 %. Die Spritzkörper zeigten keine Gelpartikel.

c. Bei 150 °C
Der Versuch wurde wie unter a.) beschrieben aber bei 150 °C durchgeführt. Die Ausbeute betrug 26,2 g. Im NMR Spektrum wurden 0,5 mol% Allophanat gefunden. Die Kennzahl des Umsatzes der Hydroxygruppen wurde mittels $^1$H-NMR mit 0,990 bestimmt. Die GPC ergab Mw: 254174 g/mol; Mn: 14363 g/mol; Mz: 3243653 g/mol. Die Zugprüfung ergab einen E-Modul von 1815 MPa und eine Bruchdehnung von 134 %. Die Spritzkörper zeigten viele Gelpartikel.

d. Bei 180 °C
Der Versuch wurde wie unter a.) beschrieben aber bei 180 °C durchgeführt. In der Reaktionsmischung formten sich zunächst sichtbar Gele und nach beendeter Zugabe des HDI bildete sich ein großer Gelklumpen am Rührer. Das Produkt wurde nicht weiter aufgearbeitet.

**Diskussion:**

Wie die Patentnachstellungen zur Herstellung eines aliphatischen thermoplastischen Polyurethans nach dem Schmelzeprozess (Versuch 3 und 4) zeigen, wurde in beiden Fällen ein Polymer mit einem hohen mittleren Molgewicht Mw erhalten; allerdings wurde der Allophanatgehalt von < 0,2 mol-% mit 0,5 mol-% bzw 0,9 mol-% deutlich überschritten. Diese Verzweigung des Polymers führte nicht nur zu einer deutlichen Reduzierung der elastischen Eigenschaften (Versuch 4: Bruchdehnung 84 %) sondern auch zur Bildung von Gelpartikeln, die die mechanischen Eigenschaften und die Oberflächenqualität der Spritzgußkörper verschlechterte.

Auch die in der Literatur beschriebenen Verfahren einer Synthese im Lösungsmittel alleine (Versuche 1, 5, 6) führten nicht zu den erfindungsgemäßen thermoplastischen Polyurethanen, da in allen Fällen das erreichte mittlere Molekulargewicht Mw zu niedrig war bzw. Vergelung einsetzte. Dies ergab dann Polymere mit sehr spröden mechanischen Eigenschaften (Versuch 1, 5 und 6b). Eine Temperaturerhöhung der Synthese im Lösungsmittel führte zu höheren mittleren Molgewichten Mw von 16637 g/mol bei 110 °C über 30846 g/mol bei 130 °C zu ca. 254000 g/mol bei 150 °C, wobei hier die dann einsetzende Verzweigung (Allophanatgehalt 0,5 mol-%; Gelbildung) deutlich merkbar war und bei 180 °C nur ein vernetztes Polymer erhalten wurde. Bei Temperaturen der Lösungsmittelsynthese unter 150 °C war der Allophanatgehalt (Verzweigung) sehr niedrig und es wurden keine Gelpartikel beobachtet. Die so hergestellten Polymere können damit als Ausgangsmaterial (Hydroxy-terminierte Präpolymere) im Sinne der Erfindung fungieren und in Kombination mit einer Kettenverlängerung mittels weiterem Isocyanat in einer Reaktivextrusion zu den erfindungsgemäßen Polymeren umgesetzt werden (Versuche 2d-h). Dabei zeigte es sich, dass ein Molgewicht von über 45000 g/mol notwendig ist, um gute elastische Eigenschaften im Polymer zu erzeugen (Vergleich Bruchdehnung Versuch 2d und 2c). Dieses erforderliche Molgewicht wird erst durch einen Gesamteinsatz von über 0,990 Äquivalenten Isocyanatgruppen erreicht (Gesamtmenge bezogen auf Gesamtmenge Hydroxygruppen) und/ oder einer Kennzahl des Umsatzes der Hydroxygruppen von über 0,978 in Schritt ii..

**Patentansprüche**

1. Verfahren zur Herstellung eines thermoplastischen Polyurethans, umfassend die Schritte:

    i. Herstellung eines aliphatischen Hydroxy-terminierten Präpolymers mittels Fällungspolymerisation durch Umsetzung von mindestens einem aliphatischen Polyol mit mindestens einem Polyisocyanat in einem aprotischen Lösungsmittel und anschließender Abtrennung des erhaltenen Hydroxy-terminierten Präpolymers, wobei das erhaltene aliphatische Hydroxy-terminierte Präpolymer eine Kennzahl für den Umsatz der Hydroxygruppen von mindestens 0,850 bis maximal 0,970, ein Massenmittel der Molmasse Mw von < 30000 g/mol und einen Allophanatgehalt von < 0,1 mol-% aufweist;

    ii. Umsetzung des in Schritt i. erhaltenen Hydroxy-terminierten Präpolymers mit einem Polyisocyanat in einem Extruder mittels Reaktivextrusion unter Erhalt des thermoplastischen Polyurethans, wobei das thermoplastische Polyurethan eine Kennzahl für den Umsatz der Hydroxygruppen von > 0,980, ein Massenmittel der Molmasse Mw von > 45000 g/mol und ein Allophanatgehalt von < 0,2 mol-% aufweist;

    wobei die Kennzahl für den Umsatz der Hydroxygruppen, das Massenmittel der Molmasse Mw und der Allophanatgehalt jeweils mit den in der Beschreibung dargelegten Methoden bestimmt werden.

2. Verfahren nach Anspruch 1, **dadurch gekennzeichnet, dass** die Reaktionstemperatur bei der Umsetzung in Schritt i. von 50 bis 150 °C, bevorzugt von 100 bis 145 °C beträgt, wobei die Reaktionstemperatur vorzugsweise mindestens 5 Minuten, weiter bevorzugt 15 bis 1200 Minuten, noch weiter bevorzugt 30 bis 300 Minuten aufrechterhalten wird.

3. Verfahren nach Anspruch 1 oder 2, **dadurch gekennzeichnet, dass** das aliphatische Polyol in Schritt i. aus der Gruppe ausgewählt ist, umfassend oder bestehend aus 1,3-Propandiol, 1,4-Butandiol, 1,5-Pentandiol, 1,6-Hexandiol, 1,8-Octandiol, 1,10-Decandiol, 1,12-Dodecandiol oder Mischungen davon, wobei das aliphatische Polyol vorzugsweise 1,4-Butandiol enthält oder daraus besteht.

4. Verfahren nach einem der vorstehenden Ansprüche, **dadurch gekennzeichnet, dass** das Polyisocyanat in Schritt i. aus der Gruppe ausgewählt ist, umfassend oder bestehend aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylen-Diisocyanaten, insbesondere m-Xylylen-Diisocyanat, oder Mischungen davon.

5. Verfahren nach einem der vorstehenden Ansprüche, **dadurch gekennzeichnet, dass** das aprotische Lösungsmittel in Schritt i. aus der Gruppe ausgewählt ist, umfassend oder bestehend aus Aromaten, halogenierten Aromaten, Estern, Ethern, Ketonen, Nitrilen und Carbonaten, besonders bevorzugt Chlorbenzol, Aceton, Methylethylketon, Butylacetat, Ethylacetat, Methoxypropylacetat, Acetonitril, Tetrahydrofuran, Diethylcarbonat, Dimethylcarbonat oder Mischungen davon.

6. Verfahren nach einem der vorstehenden Ansprüche, **dadurch gekennzeichnet, dass** die Umsetzung von aliphatischem Polyol mit dem Polyisocyanat in Schritt i. bei einer Isocyanat-Kennzahl von 0,850 bis 0,970, bevorzugt von 0,900 bis 0,960 erfolgt.

7. Verfahren nach einem der vorstehenden Ansprüche, **dadurch gekennzeichnet, dass** das in Schritt i. erhaltene aliphatische Hydroxy-terminierte Präpolymer < 2,0 Gew.-%, weiter bevorzugt von 0 bis 0,5 Gew.-% des eingesetzten Lösungsmittels aufweist, bezogen auf das Gesamtgewicht des aliphatischen Hydroxy-terminierten Präpolymers.

8. Verfahren nach einem der vorstehenden Ansprüche, **dadurch gekennzeichnet, dass** das erhaltene Hydroxy-terminierte Präpolymer eine Kennzahl für den Umsatz der Hydroxygruppen von 0,90 bis 0,96, ein Massenmittel der Molmasse Mw von 10000 bis 30000 g/mol, bevorzugt von 20000 bis 30000 g/mol, und/oder einen Allophanatgehalt von 0 bis 0,1 mol-%, bevorzugt von 0,01 bis 0,05 mol-% aufweist.

9. Verfahren nach einem der vorstehenden Ansprüche, **dadurch gekennzeichnet, dass** das Polyisocyanat aus Schritt ii. eine Funktionalität zwischen 1,5 und 2,5 aufweist und aus der Gruppe ausgewählt ist, umfassend oder bestehen aus einem aliphatischen Polyisocyanat, einem aromatischen Polyisocyanat, einem Isocyanat-terminierten Präpolymer oder Mischungen davon.

10. Verfahren nach einem der vorstehenden Ansprüche, **dadurch gekennzeichnet, dass** das Polyisocyanat aus Schritt ii. aus der Gruppe ausgewählt ist, umfassend oder bestehend aus Naphthylen-1,5-diisocyanat, Methylendi(phenylisocyanat), Toluyldiisocyanat, 1,5-Pentandiisocyanat, 1,6-Hexandiisocyanat, Isophorondiisocyanat, 1,1'-Methylenbis(4-isocyanatocyclohexan), Xylylen-Diisocyanaten, insbesondere m-Xylylen-Diisocyanat, Isocyanat-terminierte Präpolymere aus den vorgenannten Verbindungen oder Mischungen davon, wobei das Polyisocyanat aus Schritt ii. vorzugsweise Naphthylen-1,5-diisocyanat und/oder Methylendi(phenylisocyanat) enthält oder daraus besteht.

11. Verfahren nach einem der vorstehenden Ansprüche, **dadurch gekennzeichnet, dass** das Verhältnis der eingesetzten gesamten Molmenge Isocyanatgruppen in Bezug auf die eingesetzte gesamte Molmenge Hydroxygruppen in den Schritten i. und ii. von 0,982 bis 1,200, bevorzugt von 0,990 bis 1,050 und besonders bevorzugt von 0,995 bis 1,020 beträgt, wobei sich die Molmenge der Isocyanatgruppen aus Schritt i. nur auf abreagiertes Polyisocyanat bezieht.

12. Verfahren nach einem der vorstehenden Ansprüche, **dadurch gekennzeichnet, dass** das thermoplastische Polyurethan eine Kennzahl für den Umsatz der Hydroxygruppen von 0,980 bis 1,00, bevorzugt von 0,985 bis 0,995, ein Massenmittel der Molmasse Mw von 45000 bis 200000 g/mol, bevorzugt von 50000 bis 150000 g/mol, weiter bevorzugt von 60000 bis 100000 g/mol, noch weiter bevorzugt von 70000 bis 80000 g/mol und/oder einen aliphatischen Allophanatgehalt von 0 bis 0,2 mol-%, bevorzugt von 0,01 bis 0,1 mol-% aufweist.

13. Thermoplastisches Polyurethan, erhalten oder erhältlich nach einem Verfahren gemäß einem der Ansprüche 1 bis 12.

14. Verwendung eines thermoplastischen Polyurethans gemäß Anspruch 13 in einem Extrusionsverfahren, Spritzgussverfahren, Pulversinterverfahren und/oder Schmelzeverfahren, insbesondere zur Herstellung von Formteilen und/oder Beschichtungen.

15. Formteil erhalten oder erhältlich durch die Verarbeitung eines thermoplastischen Polyurethans gemäß Anspruch 13.

Europäisches
Patentamt

European
Patent Office

Office européen
des brevets

## EUROPÄISCHER RECHERCHENBERICHT

**Nummer der Anmeldung**

EP 23 17 1530

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 3 838 956 A1 (COVESTRO DEUTSCHLAND AG [DE]) 23. Juni 2021 (2021-06-23) * Beispiel 3 * | 1-15 | INV. C08G18/08 C08G18/10 C08G18/32 |
| A,D | DE 728 981 C (IG FARBENINDUSTRIE AG) 7. Dezember 1942 (1942-12-07) * Beispiele 16,24 * | 1-15 | C08G18/48 C08G18/73 |
| A | BAYER O: "DAS DI-ISOCYANAT-POLYADDITIONSVERFAHREN (POLYURETHANE)", ANGEWANDTE CHEMIE, WILEY - V C H VERLAG GMBH & CO. KGAA, DE, Bd. 59A, Nr. 9, September 1947 (1947-09), Seiten 257-288, XP009024616, ISSN: 0044-8249, DOI: 10.1002/ANGE.19470590901 * Seite 258, rechte Spalte, letzter Absatz * | 1-15 | |
| A | WO 2021/122429 A1 (COVESTRO INTELLECTUAL PROPERTY GMBH & CO KG [DE]) 24. Juni 2021 (2021-06-24) * Vergleichsbeispiel 13; Beispiele 2,11 * | 1-15 | **RECHERCHIERTE SACHGEBIETE (IPC)** C08G |
| A | WO 2021/122304 A1 (COVESTRO INTELLECTUAL PROPERTY GMBH & CO KG [DE]) 24. Juni 2021 (2021-06-24) * Beispiele 1,2 * | 1-15 | |

Der vorliegende Recherchenbericht wurde für alle Patentansprüche erstellt

| Recherchenort | Abschlußdatum der Recherche | Prüfer |
|---|---|---|
| München | 27. September 2023 | Lanz, Sandra |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 1530

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2023

| Im Recherchenbericht angeführtes Patentdokument | | Datum der Veröffentlichung | Mitglied(er) der Patentfamilie | | Datum der Veröffentlichung |
|---|---|---|---|---|---|
| EP 3838956 | A1 | 23-06-2021 | EP | 3838956 A1 | 23-06-2021 |
| | | | TW | 202132389 A | 01-09-2021 |
| | | | WO | 2021122280 A1 | 24-06-2021 |
| DE 728981 | C | 07-12-1942 | KEINE | | |
| WO 2021122429 | A1 | 24-06-2021 | CN | 114787227 A | 22-07-2022 |
| | | | EP | 4077456 A1 | 26-10-2022 |
| | | | JP | 2023506508 A | 16-02-2023 |
| | | | KR | 20220117228 A | 23-08-2022 |
| | | | US | 2022411569 A1 | 29-12-2022 |
| | | | WO | 2021122429 A1 | 24-06-2021 |
| WO 2021122304 | A1 | 24-06-2021 | CN | 114761456 A | 15-07-2022 |
| | | | EP | 3838961 A1 | 23-06-2021 |
| | | | EP | 4077450 A1 | 26-10-2022 |
| | | | TW | 202136349 A | 01-10-2021 |
| | | | US | 2022403088 A1 | 22-12-2022 |
| | | | WO | 2021122304 A1 | 24-06-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 728981 C

- EP 3838956 A1

**In der Beschreibung aufgeführte Nicht-Patentliteratur**

- *B.I.O.S. Final Report 1472,* (22), 48